Europäisches Patentamt

(19) European Patent Office

Office européen des brevets

(11) Veröffentlichungsnummer: **0 049 369**
**B1**

# (12) EUROPÄISCHE PATENTSCHRIFT

(45) Veröffentlichungstag der Patentschrift:
**18.05.83**

(21) Anmeldenummer: **81106924.4**

(22) Anmeldetag: **04.09.81**

(51) Int. Cl.³: **C 09 D 5/40, C 08 L 63/00**

(54) **Bindemittelkombination für kathodisch abscheidbare Lacke.**

(30) Priorität: **25.09.80 AT 4768/80**

(43) Veröffentlichungstag der Anmeldung:
**14.04.82 Patentblatt 82/15**

(45) Bekanntmachung des Hinweises auf die Patenterteilung:
**18.05.83 Patentblatt 83/20**

(84) Benannte Vertragsstaaten:
**BE DE FR GB IT SE**

(56) Entgegenhaltungen:
**EP-A-0 012 963**
**FR-A-2 370 085**
**FR-A-2 379 588**

(73) Patentinhaber: **Vianova Kunstharz Aktiengesellschaft,
A-8402 Werndorf (AT)**

(72) Erfinder: **Hönig, Helmut, Dr., Seebachergasse 10,
A-8010 Graz (AT)**
Erfinder: **Leitner, Wolfgang, Dr., Fellingerstrasse 13,
A-8044 Graz (AT)**
Erfinder: **Pampouchidis, Georg, Dr., Obere
Teichstrasse 31, A-8010 Graz (AT)**

(74) Vertreter: **Pitter, Robert, Dr. et al, Leechgasse 21,
A-8010 Graz (AT)**

## Bindemittelkombination für kathodisch abscheidbare Lacke

In der Lackindustrie ist es in vielen Fällen üblich, verschiedene Harztypen durch Mischung oder chemische Reaktion zu kombinieren, um besondere Eigenschaften zu erzielen. Ein anderer Grund für die Kombination von verschiedenen Harzmaterialien liegt darin, die bessere Pigmentbenetzung einer Komponente bei der Herstellung von hochpigmentierten Pigmentpasten auszunützen und die zweite Komponente zur Ergänzung, dem sogenannten «Auflacken», heranzuziehen. Auch in der Elektrotauchlackierung werden in einzelnen Fällen Zweikomponentensysteme empfohlen, wobei eine Komponente als Pigmentträger dient. Die Vermischung der beiden Komponenten kann dabei erst im ETL-Bad oder auch bereits in einer Vorstufe erfolgen.

Die vorliegende Erfindung betrifft eine Bindemittelkombination aus drei verschiedenen Harzkomponenten, die für die Formulierung kathodisch abscheidbarer Lacke herangezogen wird, wodurch eine wesentliche Verbesserung verschiedener Eigenschaften erzielt werden kann.

Gemäss vorliegender Erfindung werden daher Kombinationen von Bindemitteln auf Basis modifizierter Epoxidharze beansprucht, welche für die Formulierung verbesserter kathodisch abscheidbarer Elektrotauchlacke dienen, bestehend aus Mischungen von

(A) 40 bis 80 Gew.-% eines modifizierten Epoxidharzes mit einem Epoxidäquivalent zwischen 150 und 800, dessen Epoxidgruppen mit äquimolaren Mengen von Acrylsäure und/oder Methacrylsäure und/oder einem Halbester eines Dicarbonsäureanhydrids und eines Hydroxyalkyl(meth)acrylats umgesetzt wurden und dessen freie oder freigesetzte Hydroxylgruppen vollständig oder teilweise mit einem Umsetzungsprodukt aus äquimolaren Mengen von Toluylendiisocyanat und einem Dialkylalkanolamin reagiert wurden,

(B) 5 bis 30 Gew.-% eines modifizierten Epoxidharzes mit einem Epoxidäquivalent zwischen 150 und 800, dessen Epoxidgruppen mit äquimolaren Mengen eines Dialkylamins und/oder eines Dialkanolamins sowie gegebenenfalls anteilig mit Monocarbonsäuren, vorzugsweise Ölfettsäuren, umgesetzt wurden und dessen freie oder freigesetzte Hydroxylgruppen vollständig oder teilweise mit einem Umsetzungsprodukt aus äquimolaren Mengen von Toluylendiisocyanat und einem Hydroxyalkyl(meth)acrylat reagiert wurden und

(C) 10 bis 40 Gew.-% eines modifizierten Epoxidharzes mit einem Epoxidäquivalent zwischen 150 und 800, dessen Epoxidgruppen zu 30 bis 60 Mol % mit einem Halbester eines Dicarbonsäureanhydrids und einem N-2-Hydroxyalkyloxazolidin, 10 bis 50 Mol % mit einem primären und/oder sekundären Amin und der gegebenenfalls verbleibende Rest mit einer gesättigten und/oder ungesättigten Monocarbonsäure reagiert wurden,

wobei die Mischungen wassertolerante Lösungsmittel und/oder zur partiellen oder vollständigen Neutralisation organische und/oder anorganische Säuren und gegebenenfalls Wasser enthalten.

Gegenüber den Einzelkomponenten bzw. Kombinationen der Komponenten A und B zeigen die anspruchsgemäss formulierten Bindemittel einen wesentlich verbesserten Umgriff, d.h. eine weitgehende Beschichtung auch elektrisch abgeschirmter Innenflächen des Objektes. Überdies ergibt sich durch den Einsatz der Komponente (C) die Möglichkeit der Herabsetzung des für die Stabilität des Lackbades notwendigen Neutralisationsgrades und dadurch eine Erhöhung des elektrochemischen Abscheidungsäquivalentes.

Bei Verwendung der Komponente (C) als Anreibemedium für die Pigmente ergeben sich durch die nach Neutralisation der basischen Gruppen gute Löslichkeit dieses Harztyps weitere anwendungstechnische Vorteile:

Die auf dieser Basis hergestellte Pigmentpaste lässt sich leicht in verdünnte Lösungen der Mischungen aus (A) und (B) einarbeiten, wodurch eine einfache Möglichkeit eines Zweikomponenten-Füll- bzw. Nachgabe-Verfahrens für das ETL-Bad gegeben ist. Dieses Verfahren bringt in vielen Fällen, in denen die Anlage ohne ausreichende Vormischeinrichtungen projektiert ist, wesentliche Erleichterungen. andererseits kann das Pigment-Bindemittelverhältnis des Badmaterials während des Betriebes schneller den gegebenen Verhältnissen angepasst werden. Ein weiterer Vorteil der Verwendung solcher hochpigmentierter Farbpasten ist deren verminderte Pigmentsedimentation.

Es war überraschend, dass bei Verwendung von Komponenten mit grundlegend verschiedenen Vernetzungsmechanismen kein offensichtlicher Einfluss auf die Beständigkeitseigenschaften der Filme gefunden werden kann. Während die Komponenten (A) und (B) im wesentlichen durch thermische Polymerisation über ihre endständigen Doppelverbindungen vernetzen, führen bei der Komponente (C) hauptsächlich Umesterungen bzw. Verätherungen über die Hydroxyl- und/oder N-Methylolgruppen zur Filmbildung.

Produkte, welche als Komponente (A) eingesetzt werden können, sind unter anderem in der AT-PS 342 169, der AT-PS 346 989 oder der AT-PS 353 369 beschrieben. Es handelt sich dabei um kationische, durch thermische Polymerisation selbstvernetzende, modifizierte Epoxidharzester. Dabei werden die Epoxidgruppen von Epoxidharzen mit einem Epoxidäquivalent zwischen 150 und 800 äquimolar mit $\alpha,\beta$-ungesättigten Monocarbonsäuren, wie Acryl-, Methacrylsäure oder Halbestern aus Dicarbonsäureanhydriden und Hydroxyalkyl(meth)acrylaten umgesetzt und die freien oder freigesetzten Hydroxylgruppen vollständig oder teilweise mit einem Umsetzungsprodukt aus äquimolaren Mengen von Toluylendiisocyanat und einem Dialkanolamin reagiert. Als Epoxidharze werden im vorliegenden Fall vorzugsweise solche auf Basis von Bisphenol A bzw. von Phenolnovolaken eingesetzt. Die Herstellung solcher Produkte ist in den oben angegebenen Patenten ausführlich beschrieben.

Die Produkte der Komponente (B) sind modifizierte Epoxidharze, wie sie in den AT-PSS 342 168, 346 989 bzw. 353 369 beschrieben werden. Für die Kombinationen, wie sie gemäss der vorliegenden Erfindung eingesetzt werden, werden für diese Komponente vorzugsweise Produkte eingesetzt, welche sowohl basische als auch polymerisierbare Gruppen aufweisen und welche für sich allein bei 50%iger Neutralisation der basischen Gruppen praktisch nicht in Wasser löslich sind. Solche Produkte werden auch bereits gemäss AT-PS 353 369 als Zumischharze für kathodisch abscheidbare Harzsysteme eingesetzt. Die gemäss vorliegender Erfindung verwendeten Harze dieses Typs sind Umsetzungsprodukte von Epoxidharzen des Bisphenol A- bzw. Phenolnovolaktyps, welche ein Epoxidäquivalent zwischen 150 und 800 aufweisen, mit Dialkyl- bzw. Dialkanolaminen und gegebenenfalls Monocarbonsäuren und Isocyanatvorprodukten aus äquimolaren Mengen von Toluylendiisocyanat und Hydroxyalkyl(meth)acrylaten. Die Herstellungsweise für die als Komponente (B) geeigneten Produkte kann ebenfalls den genannten Patentschriften entnommen werden.

Die Komponente (C) entspricht Produkten, wie sie in der veröffentlichten Europäischen Patentanmeldung Nr. 00 28 402 beschrieben werden. Dabei handelt es sich um wasserverdünnbare Oxazolidingruppen tragende Epoxidharzester, in denen ein Anteil der Epoxidgruppen mit primären und/oder sekundären Aminen umgesetzt wurde. Diese Produkte können gegebenenfalls zusätzlich noch Reste von Monocarbonsäuren (Ölfettsäuren, (Meth)-Acrylsäure, Halbester aus Dicarbonsäureanhydriden und Hydroxyverbindungen wie Alkohole oder Hydroxyalkyl(meth)acrylate), enthalten.

Die Epoxidharze entsprechen denen, welche auch in den Komponenten (A) und (B) eingesetzt werden. Die Oxazolidinhalbester werden aus einem N-2-Hydroxyalkyloxazolidin durch Veresterung mit einem Dicarbonsäureanhydrid, vorzugsweise Phthalsäureanhydrid oder einem Hydrierungs- oder Substitutionsprodukt dieser Verbindung, hergestellt. Die zusätzlich eingesetzten Amine sind vorzugsweise Dialkylaminoalkylamine, gegebenenfalls in Mischung mit Dialkylaminen.

Diese Komponente (C) eignet sich ganz besonders als Anreibekomponente für die Pigmente und Füllstoffe. Durch das Fehlen einer Isocyanatkomponente ergeben sich verfahrenstechnisch wesentlich mehr Möglichkeiten bezüglich der Lösungsmittelauswahl, wodurch die an sich bereits günstigen Pigmentbenetzungseigenschaften noch verbessert werden können.

Die Komponenten des Bindemittelsystems werden als Lösungen in organischen Lösungsmitteln und/oder nach Neutralisation mit Säuren in Wasser bei Temperaturen bis maximal 80°C gemischt, wobei dieser Vorgang entsprechend der jeweiligen ETL-Verfahrenstechnik verschieden erfolgen kann. Besonders vorteilhaft ist ein Verfahren, bei dem von der Harzfertigung die Komponenten (A) und (B) bereits gemischt geliefert werden. Die Komponente (C) dient in der Lackfertigung als Anreibemedium für die Pigmente und Füllstoffe und kann dem Verbraucher getrennt oder in Mischung mit den Komponenten (A) und (B) zur Verfügung gestellt werden. Das Verhältnis der Komponenten im ETL-Bindemittelsystem kann, bezogen auf Festharz, in den Grenzen

40–80 Gew.-% Komponente A
 5–30 Gew.-% Komponente B
10–40 Gew.-% Komponente C

variiert werden. Als Lösungsmittel werden wassertolerante Lösungsmittel, wie niedere Alkohole, Glykoläther, Glykolätheracetate eingesetzt. Die für die Neutralisation der Produkte verwendbaren Säuren sind dem Fachmann bekannt; vorzugsweise werden Ameisensäure oder Essigsäure in verdünnter wässriger Lösung oder in konzentrierter Form verwendet.

Das Verfahren der Elektrotauchlackierung sowie die dabei zu beachtenden Parameter sind gleichfalls aus der Literatur dem Fachmann bekannt und bedürfen keiner weiteren Beschreibung.

Die nachfolgenden Beispiele sollen die Erfindung erläutern, stellen jedoch keine Beschränkung ihres Umfanges dar. Alle Angaben von Teilen oder Prozenten beziehen sich, sofern nicht anders angegeben, auf Gewichtseinheiten.

Erklärung der in den Beispielen verwendeten Abkürzungen:

| | |
|---|---|
| EPH I | Epoxidharz auf Basis Bisphenol A (Epoxidäquivalent 180–190) |
| EPH II | Epoxidharz auf Basis Bisphenol A (Epoxidäquivalent 480–510) |
| EPH III | Epoxidharz auf Basis eines Novolakes (Epoxidäquivalent 170–180) |
| S 1 | Methacrylsäure |
| S 2 | Acrylsäure |
| S 3 | Halbester aus THPA und HEMA |
| S 4 | Halbester aus THPA und HEA |
| S 5 | Halbester aus PA und HEMA |
| S 6 | Tallölfettsäure |
| S 7 | Halbester aus THPA und EHA |
| PA | Phthalsäureanhydrid |
| THPA | Tetrahydrophthalsäureanhydrid |
| RFS | Rizinenfettsäure |
| HEA | Hydroxyäthylacrylat |
| HEMA | Hydroxyäthylmethacrylat |
| TDI | Toluylendiisocyanat |
| DEA | Diäthylamin |
| DMEA | Dimethyläthanolamin |
| DEEA | Diäthyläthanolamin |
| DIPA | Diisopropanolamin |
| DEAPA | Diäthylaminopropylamin |

| EHA | 2-Äthyl-hexanol |
| EGLAC | Monoäthylenglykolmonoäthyläther-acetat |
| HIPOX | N-2-Hydroxypropyl-5-methyl-oxazo-lidin |
| HETOX | N-2-Hydroxyäthyloxazolidin |
| MIBK | Methylisobutylketon |
| DAEA | Diäthanolamin |
| AS | Ameisensäure |
| ES | Essigsäure |
| VP1 | Basisches Vorprodukt aus je 1 Mol TDI und DMEA (80%ig in EGLAC) |
| VP2 | Basisches Vorprodukt aus je 1 Mol TDI und DEEA (80%ig in EGLAC) |
| VP3 | Polymerisierbares Vorprodukt aus je 1 Mol TDI und HEA (100%ig) |
| VP4 | Polymerisierbares Vorprodukt aus je 1 Mol TDI und HEMA (100%ig) |
| H 1 | Halbester aus THPA und HIPOX, 70%ig in MIBK |
| H 2 | Halbester aus THPA und HETOX, 80%ig in EGLAC |
| EGL | Äthylenglykolmonoäthyläther |

Die Zusammensetzung der in den Beispielen eingesetzten Komponenten (A), (B) und (C) ist wie folgt (die Zahlen beziehen sich auf Festsubstanz):

Komponente (A)
A1: 380 EPH I + 144 S 2 (2 Mol) + 329 VP1 (1,25 Mol)

A2: 380 EPH I + 564 S 3 (2 Mol) + 364 VP2 (1,25 Mol)
A3: 1000 EPH II + 172 S 1 (2 Mol) + 737 VP1 (2,8 Mol)
A4: 650 EPH III + 1015 S 3 (3,6 Mol) + 660 VP2 (2,3 Mol)

Das EPH wird in EGLAC bei 60–70°C gelöst und die S-Verbindung zugegeben. Bei 100–110°C wird dann bis zu einer Säurezahl on praktisch 0 reagiert. Bei 60–70°C wird dann das VP zugegeben und bis zu einem NCO-Wert von 0 reagiert. Das Produkt fällt in 80%iger Lösung in EGLAC an und wird mit EGL auf 70% verdünnt.

Komponente (B)
B1: 380 EPH I + 210 DAEA + 380 VP4 (1,25 Mol)
B2: 1000 EPH II + 266 DIPA + 580 VP3 (2,0 Mol)
B3: 650 EPH III + DAEA + 280 RFS + 304 VP4 (1,4 Mol) + 580 VP3 (2,0 Mol)

Das EPH wird in EGLAC gelöst und bei 90–120°C das Amin langsam zugegeben. Nach Ende der Zugabe wird eine weitere Stunde bei 150°C reagiert; gegebenenfalls wird bei dieser Temperatur die Monocarbonsäure zugegeben und vollständig einreagiert. Dann wird bei 60–70°C das VP zugegeben und bis zu einem NCO-Wert von 0 reagiert. Die Produkte liegen 70%ig in EGLAC vor.

Komponente (C)

| | EPH | Oxazolidin-Halbester | Amin | Monocarbon-Säure |
|---|---|---|---|---|
| C1 | 250 II 1300 III | 742 H 1 | 80 DEAPA 73 DEA | 667 S 5 168 S 6 |
| C2 | 1000 II 650 III | 594 H 1 | 93 DEAPA 88 DEA | 282 S 7 |
| C3 | 1000 II 650 III | 807 H 2 | 66 DEAPA | 451 S 3 |

Die in der Tabelle angegebenen Komponenten werden mit EGL bis auf einen Festkörpergehalt von 65% verdünnt und auf 75–80°C erwärmt, bis eine Säurezahl von weniger als 5 mg KOH/g erreicht ist.

Im Falle der Verwendung von Hydroxyalkylacrylaten ist die Reaktionsfolge so zu wählen, dass eine Bildung von MICHAEL-Additionsprodukten vermieden wird.

Beispiel 1–12
In den zur Prüfung gelangenden Lacken liegen die Komponenten (bezogen auf Festharz) in den in der folgenden Tabelle angegebenen Verhältnissen vor. In der Spalte «N» wird die Menge des Neutralisationsmittels in Millimol Säure pro 100 g FH angegeben.

Pigmente, Füllstoffe und Wasser werden mit der neutralisierten Komponente (C) mittels Perlmühle oder Dreiwalze auf eine Kornfeinheit von unter 15 µm vermahlen. Die Menge an Pigment und Füllstoff wird dabei so gewählt, dass im fertigen Lack ein Pigment-Bindemittelverhältnis von 0,5:1 vorliegt. Folgende Lackzusammensetzung wurde bei der Prüfung eingesetzt:

| Festharz (gesamt) | 100 |
| Aluminiumsilikatpigment | 23 |
| Titandioxid | 24 |
| Wasser | 10 |
| Bleisilikatpigment | 2 |
| Farbruss | 1 |
| Säure | 30 mM |

Die Herstellung des Badmaterials erfolgt nach 2 Methoden, welche beide zu gleichen Ergebnissen führen:

a) Die Komponenten (A) und (B) werden als konzentrierte Harzlösungen gemischt, mit der Restmenge der angegebenen Säure versetzt und mit deionisiertem Wasser verdünnt, so dass nach Zugabe der Komponente (C) ein Festharzanteil von 12% im Bad erreicht wird. Die Pigmentpaste auf Bais der Komponente (C) wird anschliessend in die vorliegende Klarlacklösung aus den Komponenten (A) und (B) eingerührt.

b) Die Komponenten (A) und (B) werden mit der Restsäuremenge neutralisiert und mit der Pigmentpate auf Basis der Komponente (C) im konzentrierten Zustand vermischt.

Anschliessend wird mit deionisiertem Wasser auf einen Festharzgehalt von 12 Gew.-% verdünnt.

In der Spalte «V» ist die Abscheidungsspannung in Volt, in der Spalte «U» der Umgriff nach der FORD-Methode (4 mm-Box) in cm angegeben. Im Salzsprühtest nach ASTM B 117-64 auf zinkphosphatiertem Stahlblech und einer Einbrenntemperatur von 180°C (30 min) findet man nach einer Prüfdauer von 500 Stunden eine Unterwanderung von 0,5–1 mm.

| | Komponente | | | | | |
| | A | B | C | N (mM) | V (Volt) | U (cm) |
|---|---|---|---|---|---|---|
| 1 | 50 A1 | 20 B1 | 30 C1 | 45 ES | 220 | 22,5 |
| 2 | 60 A1 | 15 B2 | 25 C1 | 50 ES | 240 | 22,0 |
| 3 | 60 A1 | 10 B3 | 30 C1 | 50 AS | 240 | 23,0 |
| 4 | 55 A2 | 15 B2 | 30 C1 | 45 ES | 240 | 21,8 |
| 5 | 60 A1 | 20 B1 | 20 C2 | 50 ES | 240 | 21,5 |
| 6 | 60 A4 | 15 B1 | 15 C2 | 55 ES | 240 | 17,8 |
| 7 | 60 A3 | 20 B3 | 20 C3 | 45 ES | 240 | 19,4 |
| 8 | 60 A4 | 15 B2 | 15 C3 | 50 AS | 240 | 18,5 |
| 9 | 70 A1 | 15 B1 | 15 C1 | 50 ES | 240 | 18,3 |
| 10 | 65 A3 | 15 B3 | 20 C2 | 50 AS | 240 | 18,8 |
| 11 | 65 A4 | 10 B1 | 25 C3 | 40 ES | 240 | 22,5 |
| 12 | 40 A4 | 30 B1 | 30 C2 | 40 AS | 250 | 23,0 |

**Patentansprüche**

1. Bindemittelkombinationen für kathodisch abscheidbare Lacke auf Basis von modifizierten Epoxidharzen bestehend aus Mischungen von

(A) 40 bis 80 Gew.-% eines modifizierten Epoxidharzes mit einem Epoxidäquivalent zwischen 150 und 800, dessen Epoxidgruppen mit äquimolaren Mengen von Acrylsäure und/oder Methacrylsäure und/oder einem Halbester eines Dicarbonsäureanhydrids und eines Hydroxyalkyl(meth)-acrylats umgesetzt wurden und dessen freie oder freigesetzte Hydroxylgruppen vollständig oder teilweise mit einem Umsetzungsprodukt aus äquimolaren Mengen von Toluylendiisocyanat und einem dialkylalkanolamin reagiert wurden,

(B) 5 bis 30 Gew.-% eines modifizierten Epoxidharzes mit einem Epoxidäquivalent zwischen 150 und 800, dessen Epoxidgruppen mit äquimolaren Mengen eines Dialkylamins und/oder eines Dialkanolamins sowie gegebenenfalls anteilig mit Monocarbonsäuren, vorzugsweise Ölfettsäuren, umgesetzt wurden und dessen freie oder freigesetzte Hydroxylgruppen vollständig oder teilweise mit einem Umsetzungsprodukt aus äquimolaren Mengen von Toluylendiisocyanat und einem Hydroxyalkyl(meth)acrylat reagiert wurden und

(C) 10 bis 40 Gew.-% eines modifizierten Epoxidharzes mit einem Epoxidäquivalent zwischen 150 und 800, dessen Epoxidgruppen zu

30 bis 60 Mol % mit einem Halbester eines Dicar-· bonsäureanhydrids und einem N-Hydroxyalkyloxazolidin,
10 bis 50 Mol % mit einem primären und/oder sekundären Amin und der gegebenenfalls verbleibende Rest mit einer gesättigten und/oder ungesättigten Monocarbonsäure reagiert wurden,

wobei die Mischungen wassertolerante Lösungsmittel und/oder zur partiellen oder vollständigen Neutralisation organische und/oder anorganische Säuren und gegebenenfalls Wasser enthalten.

2. Bindemittelkombination nach Anspruch 1, dadurch gekennzeichnet, das die Komponente (C) als Anreibemedium für die Pigmente dient und die Ergänzung des Bindemittels durch die Komponenten (A) und (B) getrennt oder in Mischung in Form der Klarlacke erfolgt.

**Claims**

1. Binder combinations for cathodically depositable paints on the basis of modified epoxy resins consisting of blends of

(A) 40 to 80% by weight of a modified epoxy resin with an epoxy equivalent of between 150 and 800, the epoxy groups of which have been reacted with equimolar quantities of acrylic acid and/or methacrylic acid and/or a semiester of a dicarboxylic acid anhydride and a hydroxyalkyl(meth)-acrylate and the free or set free hydroxy groups of which have been reacted totally or partially with a reaction product of equimolar quantities of tolylene diisocyanate and a dialkylalkanoldiamine,

(B) 5 to 30% by weight of a modified epoxy resin with an epoxy equivalent between 150 and 800, the epoxy groups of which have been reacted with equimolar quantities of a dialkylamine and/or a dialkanolamine as well as optionally with portions of monocarboxylique acids, preferably oil fatty acids, and the free or set free hydroxy groups of which have been reacted totally or partially with a reaction product of equimolar quantities of tolylene diisocyanate and a hydroxyalkyl(meth)acrylate, and

(C) 10 to 40% by weight of a modified epoxy resin with an epoxy equivalent between 150 and 800, the epoxy groups of which have been reacted at a level of

30 to 60 mole-% with a semiester of a dicarboxylic acid anhydride and an N-hydroxyalkyloxazolidine,

10 to 50 mole-% with a primary and/or secondary amine and the optionally remaining rest with a saturated and/or unsaturated monocarboxylic acid,

the blends containing water tolerant solvents and/or organic and/or inorganic acids for partial or total neutralisation, and optionally water.

2. Binder combinations according to claim 1, characterised in that component (C) serves as grinding medium for the pigments and the supplement of the binder by components (A) and (B) is effected separately or as a blend in form of the clear varnishes.

**Revendications**

1. Combinaisons de liants pour peintures se déposant à la cathode à base de résines époxydiques modifiées, consistant en un mélange de:

(A) 40 à 80% en poids d'une résine époxydique modifiée avec un équivalent d'époxyde entre 150 et 800, dont les groupes époxyde ont été mis à réagir avec des quantités équimolaires d'acide acrylique et/ou d'acide méthacrylique et/ou d'un hémiester d'un anhydride dicarboxylique et d'un (méth)acrylate d'hydroxyalcoyle et dont les groupes hydroxyle libres ou libérés ont été mis à réagir complètement ou partiellement avec un produit de réaction de quantités équimolaires de toluylène-diisocyanate et d'une dialcoylalcanolamine,

(B) 5 à 30% en poids d'une résine époxydique modifiée avec un équivalent d'époxyde entre 150 et 800, dont les groupes époxyde ont été mis à réagir avec des quantités équimolaires d'une dialcoylamine et/ou d'une dialcanolamine ainsi que le cas échéant, pour une part avec des acides carboxyliques, de préférence des acides gras d'huile et dont les groupes hydroxyle libres ou libérés ont été mis à réagir complètement ou partiellement avec un produit de réaction de quantités équimolaires de toluylène-diisocyanate et d'un (méth)acrylate d'hydroxyalcoyle, et

(C) 10 à 40% d'une résine époxydique modifiée avec un équivalent d'époxyde entre 150 et 800, dont les groupes époxyde ont été mis à réagir – à raison de

30 à 60 moles % avec un hémiester d'un anhydride d'acide dicarboxylique et d'une N-hydroxyalcoyloxazolidine,

10 à 50 moles % avec une amine primaire et/ou secondaire et le radical éventuellement restant avec un acide monocarboxylique saturé et/ou insaturé,

les mélanges contenant des solvants tolérant l'eau et/ou, pour la neutralisation partielle ou complète, des acides organiques et/ou minéraux et le cas échéant de l'eau.

2. Combinaison de liants suivant la revendication 1, caractérisée en ce que le constituant (C) sert de milieu de broyage pour les pigments et le complément du liant s'effectue par les constituants (A) et (B) séparément ou en mélange sous la forme de le vernis limpide.